# EUROPEAN PATENT SPECIFICATION

(11) **EP 2 809 707 B1**
(45) Date of publication and mention of the grant of the patent: **25.09.2019**
(21) Application number: 13742925.4
(22) Date of filing: 01.02.2013
(51) Int. Cl.: C08G 77/04, C08L 75/04, C08L 101/10

(54) **WATERPROOF SILANE-ENDCAPPED ADHESIVE MIXTURE**
WASSERDICHTE SILANENDGRUPPEN-HALTIGE KLEBSTOFFMISCHUNG
MÉLANGE ADHÉSIF COIFFÉ EN EXTRÉMITÉ PAR SILANE, IMPERMÉABLE À L'EAU

(30) Priority: 03.02.2012 US 201213365850
(43) Date of publication of application: 10.12.2014
(73) Proprietor: Dickens, Carroll, Benford, Santa Ana, CA 92705 (US)
(72) Inventor: Dickens, Carroll, Benford, Santa Ana, CA 92705 (US)
(74) Representative: AWA Denmark A/S
(86) International application number: PCT/US2013/024314
(87) International publication number: WO 2013/116625

(56) References cited:
- CA-A1- 2 753 125
- DE-A1- 19 929 011
- US-A- 5 373 050
- US-A- 6 001 946
- US-A1- 2008 057 316
- US-A1- 2009 299 017

## Description

### BACKGROUND OF THE INVENTION

The present invention is directed to a method of producing a polymeric matrix adhesive, said method comprising providing a silane end-capped polymeric mixture, wherein the silane end-capped prepolymer urethane is produced by combining a silane and a prepolymer urethane The adhesive may be used, for example, to form a chemical bond between flooring materials and substrates (e.g., concrete substrates).

### SUMMARY

The polymeric matrix adhesive comprises a silane end-capped polymeric mixture; an aliphatic quencher; reinforcing extender; and a thixotropic agent; wherein the silane end-capped polymeric mixture comprises a silane end-capped prepolymer urethane, wherein the silane end-capped prepolymer urethane is produced by combining a silane and a prepolymer urethane, and wherein the prepolymer urethane comprises a slow-cure urethane prepolymer having a functionality (Fn) between about 2.5 and 2.55, an NCO content between about 15 and 18%, a viscosity between 3000 and 8000 cps at 25°C, and an equivalent weight between 250 and 270; a flexible binder urethane prepolymer having a functionality (Fn) of about 2.00, an NCO content between about 7 and 10%, a viscosity between 1500 and 3500 cps at 25°C, and an equivalent weight between 425 and 550, or a combination of both, wherein the slow-cure urethane prepolymer and the flexible binder urethane prepolymer are polyisocyantate prepolymers based on diphenylmethane diisocyanate (MDI). In some embodiments, the polymeric matrix adhesive of the present invention comprises ; an amino-functional alkoxysilane; an aliphatic metal catalyst; a moisture scavenging agent.

In some embodiments, the slow-cure urethane prepolymer has a %NCO content that achieves an optimum hardness and cure-time that allows for the elimination of the flexible binder urethane prepolymer. In some embodiments, the slow-cure urethane prepolymer comprises a %NCO content that requires the addition of the flexible binder urethane prepolymer or polyether polyol component to achieve an optimum hardness and cure-tirne.

. In some embodiments, the amino-functional alkoxysilane comprises gamma-aminopropyltrimethoxysilane. In some embodiments, the aliphatic metal catalyst comprises dibutyltindilaurate. In some embodiments, the aliphatic hydrocarbon quenching agent comprises a mixture of aliphatic fatty acid ester. In some embodiments, the moisture scavenger comprises vinyltrimethoxysilane. In some embodiments, the reinforcing extender comprises calcium carbonate. In some embodiments, the thixotropic agent comprises fumed silicate. In some embodiments, the mixture further comprises 3-glycidoxypropytrimethoxysilane. In some embodiments, the mixture further comprises a pigment.

In some embodiments, the percent weight of the slow-cure urethane prepolymer is between about 45 to 55%. In some embodiments, the percent weight of the slow-cure urethane prepolymer is about 50%. In some embodiments, the percent weight of the flexible binder urethane prepolymer is between about 30 to 40%. In some embodiments, the percent weight of the flexible binder urethane prepolymer is about 35%. In some embodiments, the percent weight of the aliphatic hydrocarbon quenching agent is between about 5 to 15%. In some embodiments, the percent weight of the reinforcing extender is between about 10 to 20%. In some embodiments, the percent weight of the reinforcing extender is about 15%. In some embodiments, the percent weight of the thixotropic agent is between about 10 to 20%).

The present invention features a method of producing a polymeric matrix adhesive. In some embodiments, the method comprises combining under high speed dispersion: a slow-cure urethane prepolymer; a flexible binder urethane prepolymer or a polyether polyol; an amino-functional alkoxysilane; an aliphatic metal catalyst; an aliphatic hydrocarbon quenching agent; a moisture scavenging agent; a reinforcing extender; and a thixotropic agent.

Disclosed herein is a method of bonding a flooring material to a substrate. In some embodiments, the method comprises providing a polymeric matrix adhesive of the present invention, applying the polymeric matrix adhesive to a substrate, and fixing a flooring material to the substrate. In some embodiments, the substrate is concrete. In some embodiments, the flooring material is wood flooring, rubber flooring, or carpet tile.

Also disclosed herein is a flooring material system. In some embodiments, the system comprises a flooring material; and an adhesion promoter, the adhesion promoter being selected from the group consisting of: silica, quartz, glass, aluminum, copper, alumina, alumino-silicate, mica, talk, an inorganic oxide, steel, iron, asbestos, nickel, zinc, lead, calcium carbonate, calcium sulfate, and barium sulfate.

Any feature or combination of features described herein are included within the scope of the present invention provided that the features included in any such combination are not mutually inconsistent as will be apparent from the context, this specification, and the knowledge of one of ordinary skill in the art. Additional advantages and aspects of the present invention are apparent in the following detailed description and claims.

### BRIEF DESCRIPTION OF THE DRAWINGS

FIG. 1 is an illustration of a silanol condensation reaction.
FIG. 2 is a description showing additives that promote flooring material adhesion.
FIG. 3 is an FTIR spectrum of a cured Luxury Vinyl Tile adhesive sample.
FIG. 4 is an FTIR spectrum of a cured Vinyl Composition Tile adhesive sample.
FIG. 5 is an FTIR spectrum of a reference spectrum of a polyurethane material.
FIG. 6 is an FTIR spectrum of a reference spectrum of a poly(dimethylsiloxane) material.
FIG. 7 is a DSC thermogram of the cured Luxury Vinyl Tile adhesive.
FIG. 8 is a DSC thermogram of the cured Vinyl Composition Tile adhesive.
FIG. 9 is a TGA thermogram of the cured Luxury Vinyl Tile adhesive.
FIG. 10 is a TGA thermogram of the cured Vinyl Composition Tile adhesive

### DESCRIPTION OF PREFERRED EMBODIMENTS

It will be understood that the claims relate to methods. References in the following to polymeric matrix adhesives and the like are provided for illustration purposes.

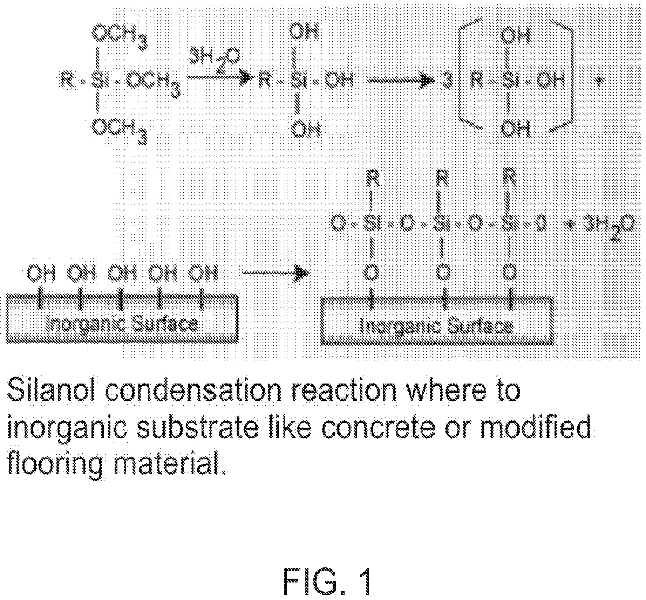

Referring now to FIG. 1-2, the present invention features polymeric matrix adhesives. The adhesives of the present invention form a waterproof chemical bond between two materials, e.g., a flooring material and a substrate (e.g. concrete). The adhesives of the present invention form a waterproof chemical bond via a silanol-bridge mechanism, e.g., see FIG. 1. The adhesive bond that is formed is waterproof. In some embodiments, the adhesive bond that is formed is alkali stable to pH 14. Evaluation of concrete moisture according to ASTM F1869 may exceed 15lbs/1000sf/24hrs and according to ASTM F2170 to 100%RH.

The adhesives of the present invention comprises a blend of prepolymer (e.g., urethane prepolymer) that is modified with a silane, e.g., a trimethoxy substituted amino functional silane, in the manufacturing process (e.g.. in situ). In some embodiments, a mixture of naturally derived aliphatic fatty acid ester is used as a diluent/compatibilizer that assists in the incorporation of hydrophobically-treated calcium carbonates and hydrophobically-treated fumed silica viscosifiers. Final adhesive formulation viscosity may be adjusted to provide trowelability and overall aesthetic.

The adhesive of the present invention may form urethane and silanol condensation bonds, e.g., to the concrete surface and to the flooring material. Generally, the silanol condensation reaction is waterproof, solvent proof, and heat resistant. The cured adhesive creates a hydrophobic barrier to liquid water, yet allows water vapor and other gasses to move through the concrete/adhesive/flooring matrix.

Table 1 describes a non-limiting example of an adhesive of the present invention. Pigment is not required in order to obtain performance results. To achieve a waterproof, pH-resistant formulation, the incorporation of hydrophobically modified additives carried by an aliphatic hydrocarbon quenching agent may be necessary. The quencher may separate the urethanes (e.g., increase the activation energy so that the formulation is not reactive or has little reactivity). The dibutyltindilaurate is an aliphatic metal catalyst used in some embodiments to initiate cure of the adhesive by moisture. Substitution of the catalyst by other chemistries is possible. The silane (e.g., gamma- aminopropyltrimethoxysilane) end-caps the urethane prepolymers. In some embodiments, the catalyst is used to accelerate the reaction (e.g., the reaction in the presence of the catalyst may be allowed to react for between about 10 to 20 minutes, between about 15 to 20 minutes, between about 20 to 30 minutes, more than about 30 minutes, etc.). In some embodiments the catalyst is not used.

**TABLE 1**

| **Component** | **Percent weight** |
|---|---|
| Slow-cure urethane prepolymer | 50 |
| Flexible binder urethane prepolymer | 35 |
| Gamma-aminopropyltrimethoxysilane | 1.5 |
| Dibutyltindilaurate | 0.1 |
| Aliphatic fatty acid ester mixture | 10 |
| Vinyltrimethoxysilane | 0.7 |
| Reinforcing extender | 15 |
| Thixotropic agent | 15 |
| 3-glycidoxypropyltrimethoxysilane | 0.35 |
| Pigment | 0.2 |

Table 2.1, Table 2.2, and Table 2.3 describe non-limiting examples of an adhesive of the present invention. As previously stated, pigment is not required in order to obtain performance results.

**TABLE 2.1**

| **Component** | **Percent weight** |
|---|---|
| Slow-cure urethane prepolymer | 50 |
| Flexible binder urethane prepolymer | 35 |
| Silane (e.g., amino-functional alkoxysilane) | 1.5 |
| Catalyst (e.g., aliphatic metal catalyst) | 0.1 |
| Quenching agent (e.g., aliphatic hydrocarbon quenching agent) | 10 |
| Moisture scavenging agent | 0.7 |
| Reinforcing extender | 15 |
| Thixotropic agent | 15 |
| Pigment | 0.2 |

**TABLE 2.2**

| **Component** | **Examples of Ranges of Percent Weights** |
|---|---|
| Silane end-capped polymeric material | 65-95 |
| Aliphatic quencher | 5-15 |
| Reinforcing extender | 5-15 |
| Thixotropic agent | 5-15 |

**TABLE 2.3**

| **Component** | **Examples of Ranges of Percent Weights** |
|---|---|
| Urethane prepolymer | 65-95 |
| Silane (e.g., amino-functional alkoxysilane) | 0.5-5 |
| Aliphatic quencher | 5-15 |
| Reinforcing extender | 5-15 |
| Thixotropic agent | 5-15 |

Table 3 describes another non-limiting example of an adhesive of the present invention. A single urethane prepolymer possessing properties similar to the mixture of the slow-cure urethane prepolymer and the flexible binder urethane prepolymer used in the previous examples is substituted. Pigment is not required in order to obtain performance results.

**TABLE 3**

| **Component** | **Percent Weight** |
|---|---|
| Urethane prepolymer | 85 |
| Silane (e.g., amino-functional alkoxysilane) | 1.5 |
| Catalyst (e.g., aliphatic metal catalyst) | 0.1 |
| Quenching agent (e.g., aliphatic hydrocarbon quenching agent) | 10 |
| Moisture scavenging agent | 0.7 |
| Reinforcing extender | 15 |
| Thixotropic agent | 15 |
| Pigment | 0.2 |

Table 4 describes another non-limiting example of an adhesive of the present invention. Pigment is not required in order to obtain performance results.

**TABLE 4**

| **Component** | **Percent weight** |
|---|---|
| Slow-cure urethane prepolymer | 45 -55 |
| Flexible binder urethane prepolymer | 30 - 40 |
| Amino-functional alkoxysilane | 1 - 5 |
| Aliphatic metal catalyst | 0.05 - 5 |
| Aliphatic hydrocarbon quenching agent | 5 - 15 |
| Moisture scavenging agent | 0.1 - 1 |
| Reinforcing extender | 10-20 |
| Thixotropic agent | 10-20 |
| Pigment | 0 - 1 |

In some embodiments, the desired combination of reactivity and hardness properties of the slow-cure prepolymer and flexible binder urethane prepolymer mixture may be achieved by a single slow-cure urethane prepolymer component with a suitable %NCO content. In some embodiments, the desired combination of reactivity and hardness properties of the slow-cure urethane prepolymer and flexible binder urethane prepolymer mixture may be achieved by blending the two components, each with its own specific %NCO content. For example, a slow-cure urethane prepolymer with about 15.8% NCO content can be mixed with a flexible binder urethane prepolymer with about 9.7% NCO content to achieve a desired reactivity and hardness properties that result from the blend.

Polyurethane prepolymers are formed by combining an excess of diisocyanate with polyol. One of the NCO groups of the diisocyanate reacts with one of the OH groups of the polyol. The other end of the polyol reacts with another diisocyanate. The resulting prepolymer has an isocyanate group on both ends. The prepolymer is a diisocyanate itself, and it reacts like a diisocyanate but with several important differences. When compared with the original diisocyanate, the prepolymer has a greater molecular weight, a higher viscosity, a lower isocyanate content by weight (%NCO), and a lower vapor pressure. Instead of a diol, a triol or higher functional polyol could also be used for the polyol in the reaction, as long as an excess amount of diisocyanate is used. Molar ratios of diisocyanate to polyol greater than 2:1 can also be used. These are called quasi-prepolymers.

Alternatively, a single urethane prepolymer (a custom prepolymer) (e.g., with a %NCO content similar to the resulting %NCO content of the two-component urethane prepolymer mixture, or with a %NCO content less than or greater than the resulting %NCO content of the two-component urethane prepolymer mixture) could be used to achieve a desired reactivity and hardness properties. For example, a urethane prepolymer with a %NCO content of about 12% NCO could have workable reactivity and hardness properties, thereby eliminating the need to blend two separate components.

In some embodiments, the percent weight of the slow-cure urethane prepolymer is between about 50 to 60%. In some embodiments, the percent weight of the slow-cure urethane prepolymer is between about 45 to 55% (e.g., 50%). In some embodiments, the percent weight of the slow-cure urethane prepolymer is between about 40 to 50%. In some embodiments, the percent weight of the slow-cure urethane prepolymer is between about 35 to 45%. In some embodiments, the percent weight of the slow-cure urethane prepolymer is between about 30 to 40%. In some embodiments, the percent weight of the slow-cure urethane prepolymer is between about 20 to 30%.

In some embodiments, the percent weight of the flexible binder urethane prepolymer is between about 40 to 50%. In some embodiments, the percent weight of the flexible binder urethane prepolymer is between about 30 to 40% (e.g., 35%). In some embodiments, the percent weight of the flexible binder urethane prepolymer is between about 25 to 35%. In some embodiments, the percent weight of the flexible binder urethane prepolymer is between about 20 to 30%. In some embodiments, the percent weight of the flexible binder urethane prepolymer is between about 15 to 25%.

In some embodiments, the desired combination of reactivity and hardness properties of the slow-cure prepolymer and flexible binder urethane prepolymer mixture may be achieved by a single urethane prepolymer component (a custom prepolymer) with a suitable %NCO content. In some embodiments, the percent weight of the urethane prepolymer is between about 65 to 75%. In some embodiments, the percent weight of the urethane prepolymer is between about 60 to 70% (e.g., 65%). In some embodiments, the percent weight of the urethane prepolymer is between about 55 to 65%. In some embodiments, the percent weight of the urethane prepolymer is between about 50 to 60%. In some embodiments, the percent weight of the urethane prepolymer is between about 45 to 55%. In some embodiments, the percent weight of the urethane prepolymer is between about 35% to 45%.

Modifying the ratio between the slow-cure urethane prepolymer and the flexible binder urethane prepolymer may allow for varied application and substrate suitability. For example, in some embodiments, the ratio of the flexible binder urethane prepolymer to the slow-cure urethane prepolymer is about 7:10. In some embodiments, the ratio of the flexible binder urethane prepolymer to the slow-cure urethane prepolymer is greater than about 7:10, for example about 4:5, 9:10, 1:1, 6:5, 3:2, etc. Such an increase over the 7:10 ratio may increase flexibility and elongation. In some embodiments, high ratios of flexible binder urethane prepolymer to slow-cure urethane prepolymer (e.g., greater than about 7:10) provides a dry film suitable for use with flooring substrates that demonstrate dimensional properties of expansion and contraction. A softer or more flexible product may also function as a sound abatement system (e.g., for wood flooring installations). In some embodiments, the ratio of the flexible binder urethane prepolymer to the slow-cure urethane prepolymer is less than about 7:10, for example about 3:5, 1:2, 2:5, 3:10, 1:5, 1:10, etc. Such a decrease below the 7:10 ratio may reduce flexibility and may increase modulus and/or reduce elastic deformation.

In some embodiments, the slow-cure urethane prepolymer comprises urethane, silane, carboxylate, epoxies, polyesters, phenolics, the like, or a combination thereof. The prepolymers are not limited to the aforementioned examples. In some embodiments, the urethane prepolymer is substituted with a polycarboxylate (e.g., to create a silane end-capped polycarboxylate).

In some embodiments, the flexible binder urethane prepolymer may be mixed in with a tackifier. In some embodiments, the tackifier is high molecular weight (e.g., greater than about 4,000g/moi) polyether polyol. The polyether polyol may help increase adhesive flexibility. For example, in some embodiments, the polyether polyol increases elongation and flexible adhesion yet maintains formulation stability. The polyether polyol may help provide a dry film suitable for use with flooring substrates that demonstrate dimensional properties of expansion and contraction. A softer or more flexible product may also function as a sound abatement system (e.g., for wood flooring installations). A softer or more flexible product may also produce an adhesive bond line that holds carpet tile firmly yet allows removal via peeling the floor back (e.g., at a severe angle) creating cohesive failure of the adhesive.

Table 5 describes a non-limiting example of properties of a polyether polyol.

**TABLE 5**

| **TYPICAL PROPERTIES OF POLYETHER POLYOL** | |
|---|---|
| **Property** | **Value** |
| Appearance | Clear viscous liquid |
| Specific Gravity at 20°C | 1.01 |
| Viscosity at 25°C, cps | 980 |
| Flash Point, PMCC, °C | 213 |
| Bulk Density, lb/gal | 8.38 |

Altering the ratio to incorporate more of higher functionality urethane creates hard setting adhesives suitable for applications including masonry, concrete anchoring, and concrete laminates. Due to the hydrophobic silanol-bridge bonding mechanism, the present invention exhibits excellent exterior stability to changes in humidity and temperature. Harder setting variants of the formulation provide maximum bond strengths to flexible substrates.

Rubber flooring materials exhibit flexibility and excellent wear properties, but may be susceptible to effects associated with osmotic activity. Rubber has low vapor permeability. When coupled with sub slab moisture vapor emissions, vapor may condense at the bond line between flooring and concrete (which can ultimately cause osmotic blister formation). The present invention provides a hydrophobic bond line that repels liquid moisture effectively preventing osmotic events. The present invention is not solely contained at the concrete to flooring interface and penetrates the concrete, covalently bonding to either substrate forming a concrete to flooring material interface that is more intimate than conventional adhesive materials.

In some embodiments, the amino-functional alkoxysilane used to react with the urethane prepolymers is gamma-aminopropyltrimethoxysilane. In some embodiments, the percent weight of the amino-functional alkoxysilane is between about 1 and 5% (e.g., 1.5%).

In some embodiments, the silane, e.g., the alkoxysilane (e.g., amino-functional alkoxysilanes, gamma-aminopropyltrimethoxysilane), comprises benzylamino, chloropropyl, epoxy, epoxy/melamine, ureido, vinyl-benzyl-amino, the like, or a combination thereof. The alkoxysilane is not limited to the aforementioned examples.

In some embodiments, the aliphatic metal catalyst is dibutyltindilaurate. In some embodiments, the percent weight of the aliphatic metal catalyst is between about .05 to 5% (e.g., .1%).

In some embodiments, the aliphatic metal catalyst comprises dibutyltindilaurate, organometallic compounds based on mercury, lead, tin, bismuth, zinc, the like, or a combination thereof.

In some embodiments, the aliphatic hydrocarbon quenching agent is an aliphatic fatty acid ester mixture. In some embodiments, the percent weight of the aliphatic hydrocarbon quenching agent is between about 15 to 25%. In some embodiments, the percent weight of the aliphatic hydrocarbon quenching agent is between about 10 to 20%. In some embodiments, the percent weight of the aliphatic hydrocarbon quenching agent is between about 5 to 15% (e.g., 10%). In some embodiments, the percent weight of the aliphatic hydrocarbon quenching agent is between about 2 to 10%. The following is a non-exhaustive list of examples of quenching agents: mixtures of aliphatic hydrocarbons of various molecular weights and fractionation containing alkanes, alkenes and alkynes derived, but not exclusively, from petroleum sources. Mixtures may also contain natural hydrocarbons from biological sources such as terpenes and isoprene and the like. These mixtures exhibit partial solubility of the urethane formulation components.

The following are non-limiting examples of properties of quenching agents that may be used in accordance with the present invention.

**TABLE 6.1**

| **Petroleum Distillates** | |
|---|---|
| Molecular Weight: | approximately 87-114 |
| Odor: | pleasant aromatic odor |
| Boiling Range: | 95 - 160°C |
| Specific Gravity: | 0.7275 - 0.7603 |
| Color: | clear, water white to yellow |
| Vapor Pressure: | 2 - 20 mm Hg at 20°C |
| Flashpoint: | -6.7 to 12.8°C (closed cup) |
| Synonyms: | benzine, naphtha 76, ligroin, high boiling petroleum ether |
| Molecular Species: | C₇-C₁₁ |

**TABLE 6.2**

| **Terpenes and Isoprene** | |
|---|---|
| Molecular Weight: | C₅H₈ |
| Molar Mass: | 68.12 g/mol |
| Density: | 0.681 g/cm³ |
| Melting Point: | -143.95 °C |
| Boiling Point: | 34.067 °C |

**TABLE 6.3**

| **Stoddard Solvent** | |
|---|---|
| Molecular Weight: | approximately 135 - 145 |
| Odor: | kerosene-like |
| Boiling Range: | 160 - 210°C |
| Specific Gravity: | 0.75 - 0.80 |
| Color: | colorless |
| Vapor Pressure: | 4 - 4.5 mm Hg at 25°C |
| Flashpoint: | 37.8°C (closed cup) |
| Synonyms: | 140 flash solvent, odorless solvent and low end point solvent |
| Molecular Species: | C₉-C₁₁ |

**TABLE 6.4**

| **Mineral spirits** | |
|---|---|
| Molecular Weight: | approximately 144 - 169 |
| Odor: | pleasant sweet odor |
| Boiling Range: | 150 - 200°C |
| Specific Gravity: | 0.77 - 0.81 |
| Color: | clear, water white |
| Vapor Pressure: | 0.8 mm (Hg) at 20°C |
| Flashpoint: | 30.2 - 40.5°C (closed cup) |
| Synonyms: | white spirits, petroleum spirits, and light petrol |
| Molecular Species: | C₉-C₁₂ |

The reinforcing extender (e.g., calcium carbonate) can help build viscosity. In some embodiments, the percent weight of the reinforcing extender (e.g., calcium carbonate) is between about 20 to 30%. In some embodiments, the percent weight of the reinforcing extender (e.g., calcium carbonate) is between about 15 to 25%. In some embodiments, the percent weight of the reinforcing extender (e.g., calcium carbonate) is between about 10 to 20% (e.g., 15%). In some embodiments, the percent weight of the reinforcing extender (e.g., calcium carbonate) is between about 5 to 10%. In some embodiments, the following may be used as reinforcing extenders: hydrophobically modified layered clays, hydrophobically modified aluminates, hydrophobically modified hydrotalcite and the like.

The thixotropic agent can fuction as a thickener and/or to build viscocity. In some embodiments, the percent weight of the thixotropic agent is between about 20 to 30%. In some embodiments, the percent weight of the thixotropic agent is between about 15 to 25%. In some embodiments, the percent weight of the thixotropic agent is between about 10 to 20% (e.g., 15%). In some embodiments, the percent weight of the thixotropic agent is between about 5 to 10%. In some embodiments, the following may be used as thixotropic agents: hydrogenated castor oil derivatives, hydrophobically modified cellulosic materials, surface modifiers based on polyethylene, polypropylene and PTFE technologies, hydrated magnesium aluminosilicate and the like.

Castor oil is extracted from castor beans. A derivative is defined by the degree of hydrogenation and aliphatic substitution. Castor oil and castor derivatives are bio-renewable, bio-sustainable and biodegradable. Therefore, castor oil derivatives have various application areas in diverse industries. It can be used as lubricants, in polyurethanes, and the like. Hydrogenated castor oil derivatives are sold under various trade names, for example: Rheocin, Rheocin T, Rheocin PC, Advitrol 50, Advitrol 150, Advitrol 100, and Ric-Syn Wax, which can all be purchased at Süd-Chemie Inc., Louisville, KY.

In some embodiments, the adhesive of the present invention comprises a moisture scavenger. In some embodiments, the moisture scavenger comprises vinyltrimethoxysilane. The moisture scavenger may help to limit the amount of moisture contamination absorbed from the atmosphere.

In some embodiments, the adhesive of the present invention comprises an adhesion promoter. For example, in some embodiments, the adhesion promoter comprises glycidoxypropyltrimethoxysilane. Glycidoxypropyltrimethoxysilane is an epoxy substituted alkoxysilane used as a cross-linking agent and adhesion promoter to improve adhesion between inorganic fillers, basic materials and resins. Glycidoxypropyltrimethoxysilane finds unsaturated sites and reacts to provide potential excess silane to increase the likelihood of the silanol-bridge bonding mechanism between the adhesive and the substrate improving mechanical strength. In some embodiments, the percent weight of the glycidoxypropylmethoxysilane is between about .1 and 1% (e.g., .35%).

In some embodiments, an additional tackifier may be used in accordance with the present invention. In some embodiments, the tackifier is the methyl ester of rosin. In some embodiments, the tackifier plasticizes the adhesive and/or reduces moisture sensitivity and/or enhances flexibility and adhesion to low energy flooring substrates.

Table 7 describes non-limiting examples of properties of a slow-cure urethane prepolymer and a flexible binder urethane prepolymer. A single slow-cure urethane prepolymer possessing properties similar to the mixture of the two components could be used.

**TABLE 7**

| | **Fn** | **Sp Gravity @ 25°C** | **% NCO** | **Eq Wt** | **Viscosity cps@ 25°C** |
|---|---|---|---|---|---|
| Slow-cure urethane prepolymer | 2.54 | 1.12 | 15.8 | 266 | 3400 |
| Flexible binder urethane prepolymer | 2.00 | 1.10 | 9.7 | 433 | 2000 |

Components of the adhesive of the present invention may be mixed in sequence (e.g., under high speed dispersion, in an open tank configuration, etc.). In some embodiments, external humidity levels are below about 70%.

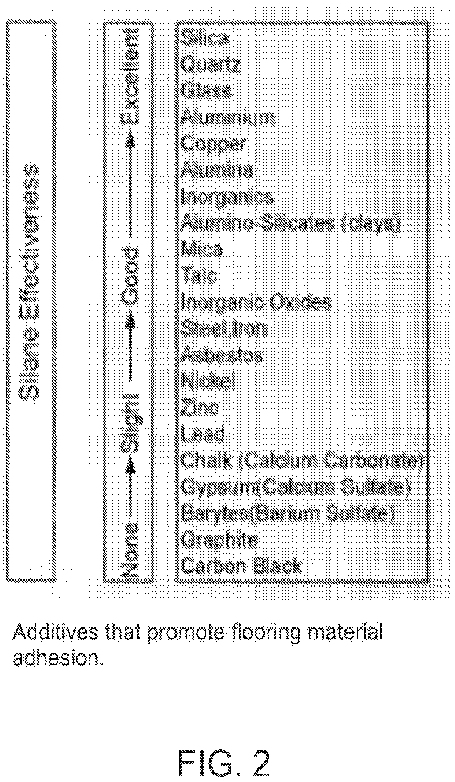

The present invention also features modifications to flooring materials to promote chemical bond and increase adhesive strength (e.g., see FIG. 2). Without wishing to limit the present invention to any theory or mechanism, it is believed that incorporating adhesion promoters in the composition of the flooring material backing may improve the performance and moisture resistance of the flooring material. In combination with the adhesive of the present invention, the flooring material may better resist the effects of elevated moisture exposure, creating a waterproof flooring installation. The adhesive may function to mitigate the moisture alone and develop a permanent waterproof bond in concert with the modified flooring material.

The hydrophobic nature of the present invention coupled with adhesive properties may provide an "all-in-one" moisture mitigation/adhesive solution to flooring installation.

### EXAMPLE 1

Below is a non-limiting example of a slow-cure urethane prepolymer (Table 8).

**Slow-Cure Urethane Prepolymer** - polyisocyantate prepolymer based on diphenylmethane diisocyanate (MDI). High functionality (Fn) and NCO content gives increased reactivity to this component. On its own this prepolymer will form highly rigid films and must be modified for proper application requirements.

**TABLE 8**

| **SLOW-CURE URETHANE PREPOLYMER SPECIFICATIONS** | |
|---|---|
| **Property** | **Value** |
| NCO content, % | 15.0 - 18.0 |
| Viscosity @ 25C, cps | 3000 - 8000 |
| Appearance | Brown liquid |
| Eq wt | 250 - 270 |
| Fn | 2.5 - 2.55 |

### EXAMPLE 2

Below is a non-limiting examples of a flexible binder urethane prepolymer (Table 9). Equivalents or substitutes are within the scope of the present invention.

**Flexible Binder Urethane Prepolymer** - polyisocyanate prepolymer based on diphenylmethane diisocyanate (MDI). Lower functionality and NCO content makes this prepolymer less reactive and slower curing. Higher equivalent weight gives this component additional flexibility and gap bridging properties.

**TABLE 9**

| **FLEXIBLE BINDER URETHANE SPECIFICATIONS** | |
|---|---|
| **Property** | **Value** |
| NCO content, % | 7.0 - 10.0 |
| Viscosity @ 25C, cps | 1500 - 3500 |
| Appearance | Clear liquid |
| Eq wt | 425 - 550 |
| Fn | 2.00 |

### EXAMPLE 3

Below is a non-limiting example of an aliphatic hydrocarbon quencher (Table 10.1 and 10.2). Equivalents or substitutes are within the scope of the present invention.

**Aliphatic Fatty Acid Ester Mixture** - a UV stable, zero VOC solvent having low viscosity, possessing high flash point and low volatility. This solvent readily biodegrades in the environment (>90% in 28 days). This solvent is not derived from petroleum distillates, is non-toxic, non-hazardous under RCRA, non-HAPS and meets clean air solvent certification. Aliphatic Fatty Acid Ester Mixture is sold under various trade names, for example: Solvation (Shepard Bros, La Habra, CA) and Promethean ME (Promethean Biofuels, Temecula, CA).

Methyl esters can be produced from a variety of raw materials such as fats and plant oils. Common resources for methyl ester manufacture are coconut, palm, canola and rapeseed oils, recycled vegetable oils, "virgin" vegetable oil and beef tallow. Recycled oil is processed to remove impurities from cooking, storage, and handling, such as dirt, charred food, and water. Virgin oils are refined, but not to a food-grade level. Degumming to remove phospholipids and other plant matter is common, though refinement processes vary.

In some embodiments, the following agents may be used as aliphatic fatty acid esters in accordance with the present invention: fatty acid methyl esters (FAME) such as myristic acid, palmitic acid, palmitoleic acid, stearic acid, oleic acid, linoleic acid, eicosanoic acid, docosenoic acid and the like, which are molecules in biodiesel derived from the transesterification of vegetable oils and the like.

**TABLE 10.1**

| **ALIPHATIC HYDROCARBON QUENCHER** | |
|---|---|
| **Property** | **Value** |
| Specific Gravity (25 °C) | 0.885 - 0.905 |
| Water Solubility | Insoluble |
| Appearance | Clear, Thin Liquid |
| Flash Point | 266 °F (130 °C) |
| KB Value | 58 |

**TABLE 10.2**

| **ALIPHATIC HYDROCARBON QUENCHER** | |
|---|---|
| **Property** | **Value** |
| Specific Gravity (25 °C) | 0.7-0.81 |
| Water Solubility | Insoluble |
| Appearance | Clear, Thin Liquid |
| Flash Point | -6 to 45C |
| KB Value | 29 - 33 |

### EXAMPLE 4

Below is a non-limiting example of a tackifier (Table 11). Equivalents or substitutes are within the scope of the present invention.

**Methyl Ester of Rosin** - has a resinous nature, clarity, high refractive index, low vapour pressure, high boiling point, and good thermal stability. It has excellent surface wetting properties and is compatible and miscible with a wide variety of materials. It is soluble in esters, ketones, alcohols, ethers, coal tar, petroleum hydrocarbons, and vegetable and mineral oils. It is insoluble in water. It is compatible at all ratios, or in limited but practically useful proportions, with nitrocellulose, ethylcellulose, chlorinated rubber, and most other film-formers; with water-soluble film-formers such as starch, casein, and glue; with natural and synthetic rubbers, natural and synthetic resins, waxes, and asphalt. It is incompatible with cellulose acetate and polyvinyl acetate. These physical properties, plus its wide compatibility, make it useful in a variety of applications, including lacquers, inks, paper coatings, varnishes, adhesives, sealing compounds, plastics, wood preservatives and perfumes. To assure minimum odour of products in which it is used, it is given a special steam sparging treatment. Methyl ester of rosin is used in lacquers to contribute high gloss, clarity, and fullness; as a plasticizing resin in pressure-sensitive and hot-melt adhesives for superior adhesion, resistance to sweating or exudation, and reduced moisture sensitivity; as a fixative and carrier in perfumes and cosmetic preparations for its low vapour pressure, neutral character, pleasant odour, and high co-solvent action; for various combinations of these and other properties in inks, varnishes, and asphalts; as a replacement for castor oil; as a rubber softener; and in many similar applications. Methyl ester of rosin is sold under various trade names, for example: Abalyn (Eastman Chemical BV, The Netherlands)

**TABLE 11**

| **METHYL ESTER OF ROSIN** | |
|---|---|
| **Property** | **Value** |
| Density at 25 °C | 1.04 kg/dm³ |
| Water Solubility | Insoluble |
| Viscosity at 25 °C | 3000-6000 mPa. s |
| Flash Point | 170 °C |
| Refractive Index at 20 °C | 1.530 |

### EXAMPLE 5: METHOD OF PRODUCTION

The present invention features a method of dispersing a urethane prepolymer. In some embodiments, the method comprises providing a urethane prepolymer and adding a solvent comprising a fatty acid ester component, wherein the solvent homogeneously disperses the urethane prepolymer. In some embodiments, the method further comprises adding a silane. In some embodiments, the method further comprises adding a reinforcing extender. In some embodiments, the method further comprises adding a thixotropic agent.

In some embodiments, the ratio of the fatty acid component to the urethane prepolymer is 10 to 20: 40 to 80. In some embodiments, the ratio of the fatty acid component to the urethane prepolymer is 14 to 16: 40 to 50. In some embodiments, the ratio of the fatty acid component to the urethane prepolymer is 14 to 16: 65 to 75. In some embodiments, the ratio of the fatty acid component to the urethane prepolymer is 14.5: 44. In some embodiments, the ratio of the fatty acid component to the urethane prepolymer is 14.5: 71.5.

The present invention also features the method of producing a polymeric matrix adhesive. In some embodiments, the method comprises the following steps:
a) providing a silane end-capped polymeric mixture;
b) adding an aliphatic quencher;
c) adding a reinforcing extender; and
d) adding a thixotropic agent.
In some embodiments, the polymeric matrix adhesive is produced at a relative humidity of at least 1% when one or more of steps a), b), c), and/or d) is performed.

Humidity can be measured in several ways, but relative humidity is the most common. As understood by one of ordinary skill, the relative humidity is the ratio of the partial pressure of water vapor in an air-water mixture to the saturated vapor pressure of water at a given temperature.

In some embodiments, the method is performed at a relative humidity of about 1% to 5%. In some embodiments, the method is performed at a relative humidity of about 5% to 10%. In some embodiments, the method is performed at a relative humidity of about 10% to 15%. In some embodiments, the method is performed at a relative humidity of about 15% to 20%. In some embodiments, the method is performed at a relative humidity of about 20% to 25%. In some embodiments, the method is performed at a relative humidity of about 25% to 30%. In some embodiments, the method is performed at a relative humidity of about 30% to 35%. In some embodiments, the method is performed at a relative humidity of about 35% to 40%. In some embodiments, the method is performed at a relative humidity of about 40% to 45%. In some embodiments, the method is performed at a relative humidity of about 45% to 50%. In some embodiments, the method is performed at a relative humidity of about 55% to 55%. In some embodiments, the method is performed at a relative humidity of about 55% to 60%. In some embodiments, the method is performed at a relative humidity of about 60% to 65%. In some embodiments, the method is performed at a relative humidity of about 65% to 70%. In some embodiments, the method is performed at a relative humidity of about 70 to 75%. In some embodiments, the method is performed at a relative humidity of about 75% to 80%. In some embodiments, the method is performed at a relative humidity of about 80% to 85%. In some embodiments, the method is performed at a relative humidity of about 85% to 90%. In some embodiments, the method is performed at a relative humidity of about 90% to 95%. In some embodiments, the method is performed at a relative humidity of about 95% to 100%.

The following is an example of a method of producing a composition of the present invention. Components of the adhesive of the present invention may be mixed in sequence (e.g., under high speed dispersion, in an open tank configuration, etc.).
1. Add 50% wt. (by weight of total formulation) slow-cure urethane prepolymer with 15.8% NCO content.
2. Add and continuously blend 35% wt. flexible binder urethane prepolymer with 9.7% NCO content.
3. Add and continuously blend 1.5% wt. gamma-aminopropyltrimethoxysilane.
4. Add and continuously blend 0.1% wt. dibutyltinlaurate to catalyze the reaction.
5. Allow components 1-4 to blend thoroughly (approximately 15-20 minutes).
6. Add and continuously blend 10% wt. mixture of aliphatic fatty acid ester (non-petroleum base) to quench the urethane reaction.
7. Add and continuously blend 0.7% wt. vinyltrimethoxysilane to scavenge potential atmospheric humidity (from open tank configuration).
8. Add and continuously blend 15% wt. surface-treated natural calcium carbonate reinforcing extender to add body to the formulation and build viscosity.
9. Add and continuously blend 15% wt. surface treated fumed silicate to achieve "high viscosity with low shear, and low viscosity with high shear" appropriate for trowel application.
10. Add and continuously blend 0.35% wt. 3-glycidoxypropyltrimethoxysilane.
11. Add and continuously blend 0.2% wt. pigment to achieve desired aesthetics.

### EXAMPLE 6: METHOD OF PRODUCTION

The following is another example of a method of producing a composition of the present invention. Components of the adhesive of the present invention may be mixed in sequence (e.g., under high speed dispersion, in an open tank configuration, etc.).
1. Add 43% wt. (by weight of total formulation) slow-cure urethane prepolymer with 16% NCO content. In some embodiments, the slow-urethane prepolymer has a % NCO content between about 5% to 25%.
2. Add 1% wt. (by weight of total formulation) slow-cure urethane prepolymer with 22% NCO content. In some embodiments, the slow-urethane prepolymer has a % NCO content between about 15% to 35%.
3. Add and continuously blend 26% wt. polyether polyol tackifier.
4. Add and continuously blend 1% wt. gamma-aminopropyltrimethoxysilane.
5. Add and continuously blend 0.2% wt. dibutyltinlaurate to catalyze the reaction.
6. Allow components 1-5 to blend thoroughly (approximately 15-20 minutes).
7. Add and continuously blend 14.5% wt. mixture of aliphatic fatty acid ester (non-petroleum base) to disperse the urethane prepolymer and quench the urethane reaction.
8. Add and continuously blend 0.3% wt. vinyltrimethoxysilane to scavenge potential atmospheric humidity (from open tank configuration).
9. Add and continuously blend 9% wt. surface-treated natural calcium carbonate reinforcing extender to add body to the formulation and build viscosity.
10. Add and continuously blend 3% wt. surface treated fumed silicate to achieve "high viscosity with low shear, and low viscosity with high shear" appropriate for trowel application.
11. Add and continuously blend 1.5% wt. methyl ester of rosin, to plasticize the adhesive and/or reduce moisture sensitivity and/or enhance flexibility and adhesion to low energy flooring substrates.
12. Add and continuously blend 0.5% wt. pigment to achieve desired aesthetics.

### EXAMPLE 7: METHOD OF PRODUCTION

The following is another example of a method of producing a composition of the present invention. Components of the adhesive of the present invention may be mixed in sequence (e.g., under high speed dispersion, in an open tank configuration, etc.).
1. Add 53.5% wt. (by weight of total formulation) slow-cure urethane prepolymer with 16% NCO content. In some embodiments, the slow-urethane prepolymer has a % NCO content between about 5% to 25%.
2. Add and continuously blend 18% wt. flexible binder urethane prepolymer with 9.7% NCO content. In some embodiments, the slow-urethane prepolymer has a % NCO content between about 5% to 15%.
3. Add and continuously blend 1 % wt. gamma-aminopropyltrimethoxysilane.
4. Add and continuously blend 0.1% wt. dibutyltinlaurate to catalyze the reaction.
5. Allow components 1-4 to blend thoroughly (approximately 15-20 minutes).
6. Add and continuously blend 14.5% wt. mixture of aliphatic fatty acid ester (non-petroleum base) to disperse the urethane prepolymer and quench the urethane reaction.
7. Add and continuously blend 0.4% wt. vinyltrimethoxysilane to scavenge potential atmospheric humidity (from open tank configuration).
8. Add and continuously blend 9% wt. surface-treated natural calcium carbonate reinforcing extender to add body to the formulation and build viscosity.
9. Add and continuously blend 0.5% wt. pigment to achieve desired aesthetics.

### CURED ADHESIVE PRODUCT

The present invention features a cured, waterproof polymeric matrix adhesive. In some embodiments, the adhesive comprises a hydrophobically treated reinforcing extender, a silane end-capped polymeric material, a urethane component, and a hydrocarbon. In some embodiments, the cured, waterproof polymeric matrix adhesive is amorphous, which is a noncrystalline solid in which the atoms and molecules are not organized in a definite lattice pattern.

In some embodiments, the stoichiometry relationship of the hydrophobically modified reinforcing extender, the silane end-capped polymeric material, the urethane component, and the hydrocarbon is 0.5 to 2.5: 1.5 to 10: 0.5 to 2: 4 to 7. In some embodiments, the stoichiometry relationship of the hydrophobically modified reinforcing extender, the silane end-capped polymeric material, the urethane component, and the hydrocarbon is 1 to 2: 6 to 9: 1 to 2: 5 to 6. In some embodiments, the stoichiometry relationship of the hydrophobically modified reinforcing extender, the silane end-capped polymeric material, the urethane component, and the hydrocarbon is 1.5 to 2: 1.5 to 3: 1 to 2: 5 to 6.

In some embodiments, the stoichiometry relationship of the hydrophobically modified reinforcing extender, the silane end-capped polymeric material, the urethane component, and the hydrocarbon is 1.2: 7.6: 1.1: 5.5. The cured, waterproof polymeric matrix adhesive with this stoichiometric relationship is preferable for applications using luxury vinyl tile.

In some embodiments, the stoichiometry relationship of the hydrophobically modified reinforcing extender, the silane end-capped polymeric material, the urethane component, and the hydrocarbon is 1.8: 2.2: 1.1: 5.5. The cured, waterproof polymeric matrix adhesive with this stoichiometric relationship is preferable for applications using vinyl composition tile.

In the present invention, the use of a hydrophobic modified reinforcing extender contributes to the overall waterproof quality of the cured, waterproof polymeric matrix adhesive. In some embodiments, the hydrophobically modified reinforcing extender provides an increase in mechanical strength of the present invention. In some embodiments, the hydrophobically modified reinforcing extender provides dimensional stability to the present invention. In some embodiments, the hydrophobically modified reinforcing extender reduces shrinkage in the present invention. In some embodiments, the hydrophobically modified reinforcing extender reduces cracking in the present invention.

Hydrophobic modification is the treatment of a substrate's surface so that it becomes non-polar. A surface can be polar because of the hydrogen bonding locations. By eliminating or reducing the hydrogen bonding at the surface, the surface is shielded from interacting with water molecules and is therefore rendered hydrophobic. For calcium carbonate, it is theorized that although calcium carbonates do not form stable bonds with silicates, the low molecular weight and low surface energy of the silicates allow for the silicates to penetrate porous structures and encapsulate the substrate in a silica-rich network.

In some embodiments, a reinforcing extender is hydrophobically modified by adding a silane. In some embodiments, the reinforcing extender is hydrophobically modified by the addition of an aliphatic silane to the reinforcing extender.

In the present invention, the hydrophobically treated reinforcing extender comprises a mineral component. In some embodiments, the mineral component comprises a calcium carbonate. In some embodiments, the following may comprise the mineral component: layered clays, aluminates, hydrotalcite and the like.

In the present invention, the silane end-capped polymeric material forms a silanol bridge with the flooring substrate.

In some embodiments, the silane
end-capped polymeric material ranges in molecular weight from about 3,000 g/rnol to 10,000 g/mol.

In the present invention, the urethane component facilitates a moisture cure process. In a moisture cure process, water is removed from the adhesive by reacting with the free isocyanate from the excess urethane prepolymer. The water and isocyanate react to form carbamic acid. The carbamic acid is highly unstable and therefore breaks down into an amine and carbon dioxide. The gaseous carbon dioxide is released from the adhesive matrix. The amine reacts with other isocyanate molecules and forms a urea linkage. The urea linkage contributes to the increased crosslink density of the adhesive.

In some embodiments, the urethane component comprises pure urethane. In some embodiments, the urethane component comprises a polyurethane linkage. In some embodiments, the polyurethane linkage comprises an NHCO₂. In some embodiments, the urethane component comprises hybrid polymers of epoxy and urethane. In some embodiments, the urethane component is replaced with a polyether polyol of varying molecular weight, ranging from 4,000 g/mol to 10,000 g/mol and having a Hydroxyl number of less than 29.5 mg KOH/g Polyol. As understood by one of ordinary skill, the hydroxyl number is the weight of KOH in milligrams that will neutralize the acid from 1 gram of polyol.

In some embodiments, the polyurethane linkage comprises

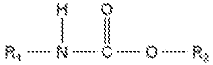

In some embodiments, the R₁ comprises a group consisting of a hydrogen; an aliphatic group ranging from 1 to 20 carbon atoms; a linear, branched, or cyclic alkene group ranging from 1 to 20 carbon atoms; a cycloaliphatic hydrocarbon group ranging from 5 to 18 carbon atoms; an araliphatic hydrocarbon group ranging from 5 to 18 carbon atoms, an aromatic hydrocarbon; a -C(COOR₃)-CH₂(COOR₄), where R₃ and R₄ represent an alkyl group ranging from 1 to 20 carbon atoms; a -(CH₂)₃(O₂CHN)-(C₆H₁₀)-CH₂(C₆H₁₀)-NCO; or a -(C₆H₁₀)-CH₂(C₆H₁₀)-NCO.

In some embodiments, the R₂ comprises a group consisting of a hydrogen; an aliphatic group ranging from 1 to 20 carbon atoms; a linear, branched, or cyclic alkene group ranging from 1 to 20 carbon atoms; a cycloaliphatic hydrocarbon group ranging from 5 to 18 carbon atoms; an araliphatic hydrocarbon group ranging from 5 to 18 carbon atoms, an aromatic hydrocarbon; a -C(COOR₃)-CH₂(COOR₄), where R₃ and R₄ represent an alkyl group ranging from 1 to 20 carbon atoms; a -(CH₂)₃(O₂CHN)-(C₆H₁₀)-CH₂(C₆H₁₀)-NCO; or a -(C₆H₁₀)-CH₂(C₆H₁₀)-NCO.

In the present invention, the hydrocarbon comprises a residual carbon and a residual oxygen. In some embodiments, the hydrocarbon comprises a C₁₁.₃HₓO.

### EXAMPLE 8: CURED ADHESIVE PRODUCT

Below is a non-limiting example of elemental atomic concentrations detected in the adhesives (Table 12). Equivalents or substitutes are within the scope of the present invention.

**TABLE 12**

| **ATOMIC CONCENTRATIONS OF ELEMENTS DETECTED IN THE ADHESIVES** | | |
|---|---|---|
| Element | LVT Atomic % | VCT Atomic % |
| Carbon (C) | 71.76 | 78.34 |
| Oxygen (O) | 18.77 | 15.44 |
| Silicon (Si) | 7.60 | 2.24 |
| Calcium (Ca) | 1.15 | 1.82 |
| Nitrogen (N) | 1.13 | 1.13 |
| Sulfur (S) | -- | 0.64 |
| Chlorine (Cl) | -- | 0.40 |

The data in Table 10 was collected using x-ray photoelectron spectroscopy (XPS). The XPS analysis was performed over an elliptical area irradiated by the low-energy (1487 eV) monochromatic aluminum KD x-ray beam with a major axis of 1.2 mm and a minor axis of 0.6 mm. This is an area of approximately 0.6 mm². A wide-angle input lens, hemispherical analyzer, and a multi-channel detector make the spectrometer very efficient. The depth of the analyzed volume is about 8 nm, which is determined by the small mean-free path of the emitted photoelectrons. The elemental survey spectra cover the binding energy range from 0 to 1100 eV, with a step size of 0.5 eV. This step size, with the monochromator, the moderate analyzed area size, and a high signal-to-noise ratio, improves the quantitative accuracy and sensitivity beyond industry standards. The XPS system consists of a turbomolecularly pumped introduction chamber, an ion pumped sample preparation chamber, and an analysis chamber which is also ion pumped. When samples are inserted into the Analysis Chamber, they pass through the Preparation Chamber, which decreases the exposure of the Analysis Chamber to water vapor and hydrocarbons from the Introduction Chamber. Samples of different customers are segregated to minimize cross contamination.

The elements present are consistent with a polyurethane (carbon, oxygen, and nitrogen) in addition to siloxane (accounting for the silicon) and calcium carbonate (accounting for the calcium). The chlorine and sulfur are present in trace amount in the vinyl composition tile adhesive.

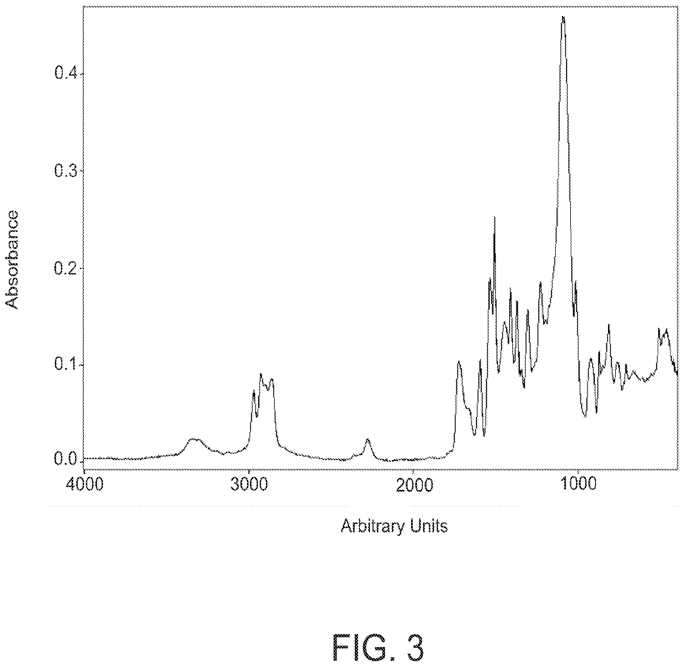

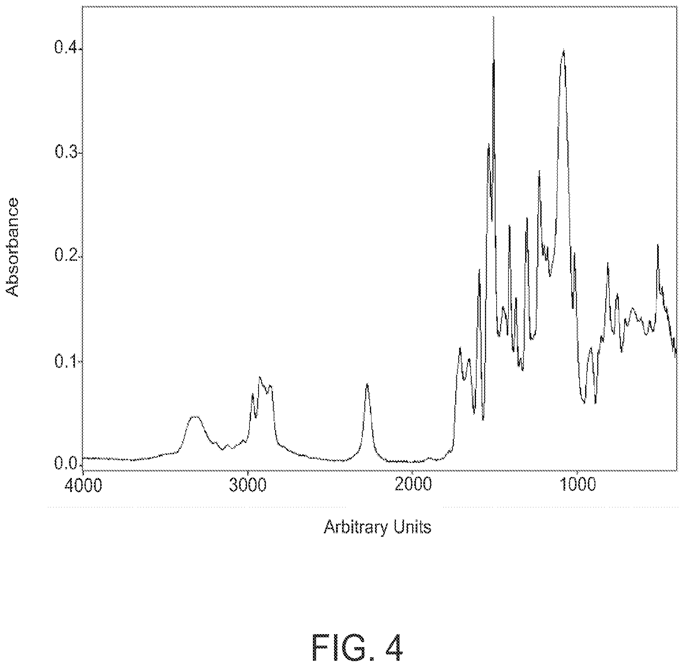

Referring now to FIGs. 3-4, the figures show non-limiting examples of adhesives of the present invention. Equivalents or substitutes are within the scope of the present invention.

For FIGs. 3-4, all FTIR data were collected using a JASCO 6100 Infra-red spectrometer equipped with a Golden Gate Attenuated Total Reflectance (ATR) Cell. Spectra were analyzed using BioRad's KnowItAII Informatics System, Jasco IR Edition. The sample was scanned 256 times to obtain a high signal to noise ratio.

Each adhesive was analyzed after curing. In the case of both adhesives, the isocyanate peak is weakly present at 2270 cm⁻¹. The luxury vinyl tile adhesive has a smaller isocyanate peak than the vinyl composite tile adhesive. This is consistent with the measurements made by the titration of the free isocyanate groups and the physical properties of the material. Furthermore, the 3320 cm⁻¹ peak present is a feature consistent with the N-H bonds of the polyurethane linkages. This can be observed for both the cured luxury vinyl tile and the vinyl composition tile adhesives.

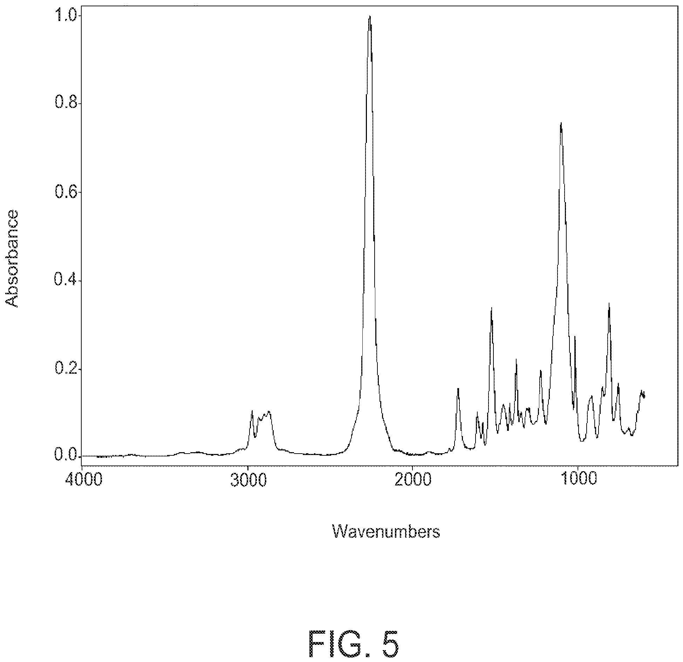

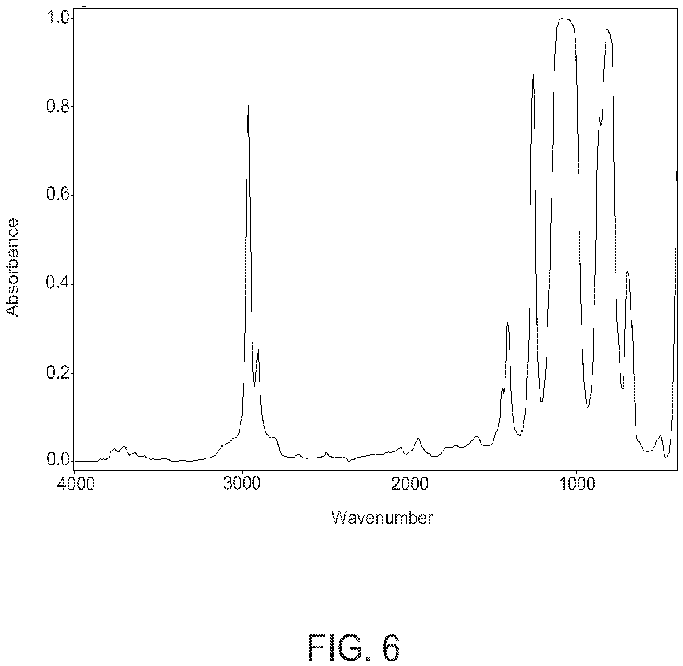

The spectra of FIGs. 3-4 were collected and compared to reference spectra of FIGs. 5-6. The several unmatched features are in the adhesive spectra but are present in the adhesive samples. Most interestingly, the typical urethane peak structure is present at 1536 cm⁻¹ (N-H deformation) and 1715-1730 cm⁻¹ (urethane C=O stretch) but there are also additional features in these regions at 1509 cm⁻¹ and 1659 cm⁻¹. These features correspond to polyurethane bonds with non-carbon substitutions in proximity to the linkage. This could correspond to the siloxane modification of urethane precursors.

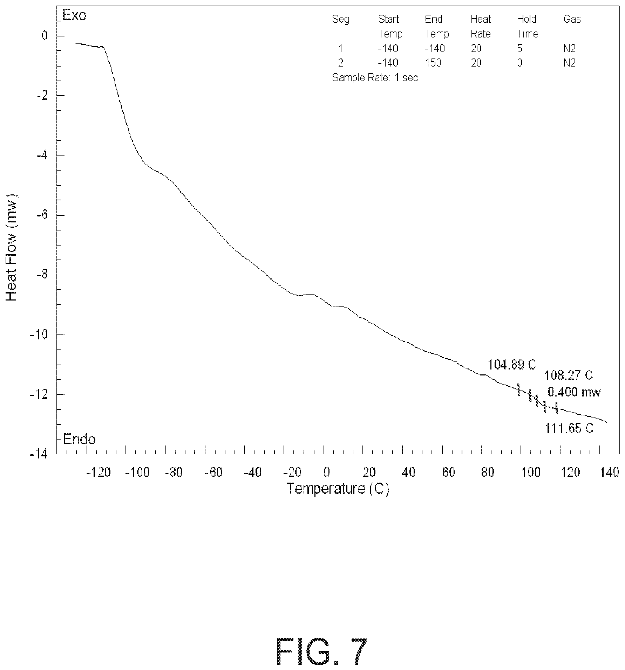

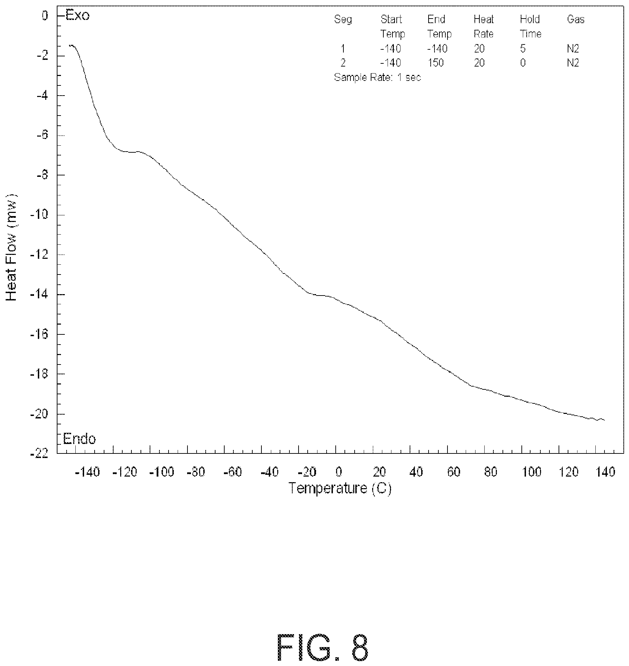

Referring now to FiGs 7-8, the figures show non-limiting examples of adhesives of the present invention. Equivalents or substitutes are within the scope of the present invention. A glass transition feature was observed at 108°C for the cured luxury vinyl tile adhesive. There were no features indicative of a glass transition for the cured vinyl composition tile adhesive in the temperature range scanned.

For FIGs 7-8, all DSC data were collected using a TA Instruments 910 DSC with an Instrument Specialists Inc. DSC high-sensitivity cell controlled by Instrument Specialists Inc. (ISI) Windows-based data collection software. Data were then analyzed using ISI's analysis program. The degree of cure determination loosely followed the ASTM E1356-08 standard. In brief, the sample was cooled to 140°C from room temperature and was then heated to 150°C at a rate of 20°C/min under dry nitrogen flow at a rate of 50 mL/min. Samples were held in crimp-sealed aluminum pan for the duration of the testing.

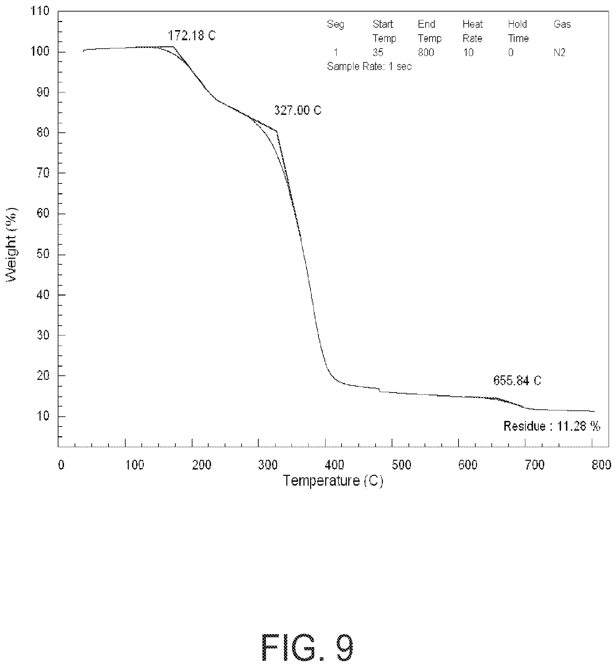

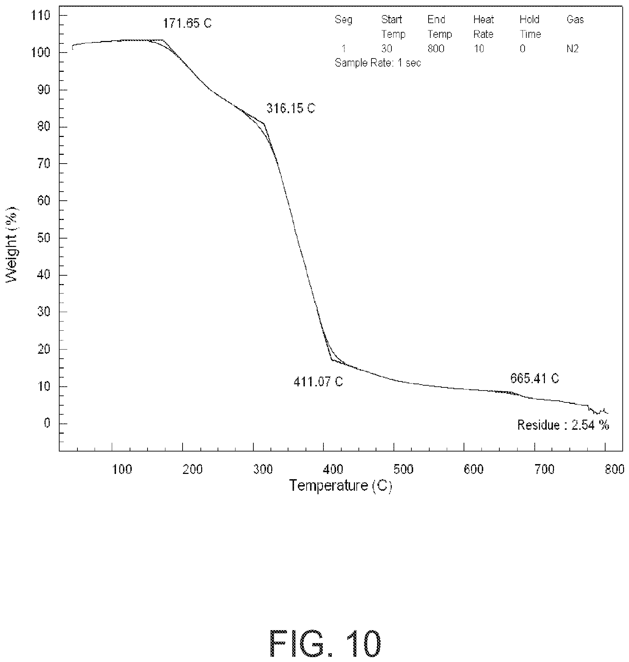

Referring now to FIGs 9-10, the figures show non-limiting examples of adhesives of the present invention. Equivalents or substitutes are within the scope of the present invention. There were four decompositions observed for the cured luxury vinyl tile adhesive. The first was at 172 °C, then a second at 327 °C and a final smaller loss at 656°C. The residual mass was 11 %. There were also four decompositions observed for the vinyl composition tile adhesive. The first was the same 172 °C, then a second at 316 °C and a final smaller loss at 665°C. The residual mass was 2.5%, much less than the luxury vinyl tile adhesive.

For FIGs. 9-10, all data were collected using a TA Instruments 951 TGA controlled by Instrument Specialists Inc (ISI) windows-based data collection software. Data were then analyzed using ISI's analysis program. A clean platinum TGA pan was placed on the quartz rod to tare off the weight of the empty sample pan under nitrogen gas flow (at 50 ml/min) long enough for the weight to stabilize. A sample of the adhesive material was placed in the pan. The furnace tube was then closed. The sample was then heated from room temperature to 800°C at a rate of 10°C/min.

Partially end capped, silane modified moisture-cure urethane blend having a content percentage ratio of free reacting urethane and silane endcapped urethane of approximately 1:4 (25% free urethane to 75% silane end-capped urethane). This ratio can vary dependent upon final cure response. Higher free urethane content provides for a faster more reactive final formulation suitable for applications requiring more immediate cure such as concrete anchoring. Higher end capped ratios provide slower reactivity allowing for broad field application of adhesive more suited to flooring installations. The synergistic physical formulation is a hydrolytically stable suspension of the previously described modified urethane component blend in a hydrophobic carrier, having the final viscosity adjusted with hydrophobically modified organic and inorganic viscosifiers. This final reactive formulation is a careful non-stoichiometric balance of reagents, held in suspension by the hydrophobic carrier, that when exposed to moisture functionally repels liquid water yet allows water vapor (restricted reagent) to react and fulfill the kinematic restriction found in the reaction simplex.

## Claims

1. A method of producing a polymeric matrix adhesive, said method comprising:
a) providing a silane end-capped polymeric mixture;
b) adding an aliphatic quencher;
c) adding reinforcing extender; and
d) adding a thixotropic agent;
wherein the silane end-capped polymeric mixture comprises a silane end-capped prepolymer urethane, wherein the silane end-capped prepolymer urethane is produced by combining a silane and a prepolymer urethane, and
wherein the prepolymer urethane comprises a slow-cure urethane prepolymer having a functionality (Fn) between about 2.5 and 2.55 , an NCO content between about 15 and 18%, a viscosity between 3000 and 8000 cps (between 3000 and 8000 mPas) at 25°C, and an equivalent weight between 250 and 270; a flexible binder urethane prepolymer having a functionality (Fn) of about 2.00, an NCO content between about 7 and 10%, a viscosity between 1500 and 3500 cps (between 1500 and 3500 mPas) at 25°C, and an equivalent weight between 425 and 550, or a combination of both, wherein the slow-cure urethane prepolymer and the flexible binder urethane prepolymer are polyisocyantate prepolymers based on diphenylmethane diisocyanate (MDI).

2. The method of claim 1, wherein the silane comprises an amino-functional alkoxysilane.

3. The method of claim 1, wherein a catalyst is added to the silane that is added to the prepolymer urethane.

4. The method of claim 1, wherein the aliphatic quencher comprises an aliphatic fatty acid ester.

5. The method of claim 1, wherein the reinforcing extender comprises calcium carbonate.

6. The method of claim 1, wherein the thixotropic agent comprises silicate.

7. The method of claim 1, wherein the method further comprises adding a moisture scavenger.

8. The method of claim 1, wherein the method further comprises adding an adhesion promoter.

9. The method of claim 1, wherein the method further comprises adding a tackifier.

10. The method of claim 10, wherein the tackifier comprises polyether polyol having a molecular weight of at least 4000 g/mol.

11. The method of claim 1, wherein the percent weight of the prepolymer urethane is between about 70 to 95%.

12. The method of claim 1, wherein the percent weight of the slow-cure urethane prepolymer is between about 45 to 75%.

13. The method of claim 1, wherein the percent weight of the flexible binder urethane prepolymer is between about 15 to 40%.

14. The method of claim 1, wherein the percent weight of the aliphatic quencher is between about 5 to 15%.

15. The method of claim 1, wherein the percent weight of the reinforcing extender is between about 5 to 20%.

16. The method of claim 1, wherein the percent weight of the thixotropic agent is between about 1 to 20%.

## Patentansprüche

1. Verfahren zur Herstellung eines Polymermatrix-Klebstoffs, wobei das Verfahren umfasst:
a) Bereitstellen einer Silan-Endgruppen-haltigen Polymermischung;
b) Zusetzen eines aliphatischen Quenchers;
c) Zusetzen eines Verstärkungs-Extenders; und
d) Zusetzen eines thixotropen Mittels;
wobei die Silan-Endgruppen-haltige Polymermischung ein Silan-Endgruppen-haltiges Präpolymerurethan umfasst, wobei das Silan-Endgruppen-haltige Präpolymerurethan durch Kombinieren eines Silans und eines Präpolymerurethans hergestellt wird, und wobei das Präpolymerurethan ein langsam härtendes Urethanpräpolymer mit einer Funktionalität (Fn) zwischen ungefähr 2,5 und 2,55, einem NCO-Gehalt zwischen ungefähr 15 und 18 %, einer Viskosität zwischen 3000 und 8000 cps (zwischen 3000 und 8000 mPas) bei 25 °C und einem Äquivalenzgewicht zwischen 250 und 270; ein flexibles Bindemittel-Urethanpräpolymer mit einer Funktionalität (Fn) von ungefähr 2,00, einem NCO-Gehalt zwischen ungefähr 7 und 10 %, einer Viskosität zwischen 1500 und 3500 cps (zwischen 1500 und 3500 mPas) bei 25 °C und einem Äquivalenzgewicht zwischen 425 und 550, oder eine Kombination von beiden, umfasst, wobei das langsam härtende Urethanpräpolymer und das flexible Bindemittel-Urethanpräpolymer Polyisocyanatpräpolymere auf der Basis von Diphenylmethandiisocyanat (MDI) sind.

2. Verfahren nach Anspruch 1, wobei das Silan ein Amino-funktionales Alkoxysilan umfasst.

3. Verfahren nach Anspruch 1, wobei ein Katalysator dem Silan zugesetzt wird, das dem Präpolymerurethan zugesetzt wird.

4. Verfahren nach Anspruch 1, wobei der aliphatische Quencher einen aliphatischen Fettsäureester umfasst.

5. Verfahren nach Anspruch 1, wobei der Verstärkungs-Extender Calciumcarbonat umfasst.

6. Verfahren nach Anspruch 1, wobei das thixotrope Mittel Silikat umfasst.

7. Verfahren nach Anspruch 1, wobei das Verfahren ferner das Zusetzen eines Feuchtigkeitsfängers umfasst.

8. Verfahren nach Anspruch 1, wobei das Verfahren ferner das Zusetzen eines Haftpromoters umfasst.

9. Verfahren nach Anspruch 1, wobei das Verfahren ferner das Zusetzen eines Klebrigmachers umfasst.

10. Verfahren nach Anspruch 10, wobei der Klebrigmacher Polyetherpolyol mit einem Molekulargewicht von mindestens 4000 g/mol umfasst.

11. Verfahren nach Anspruch 1, wobei die Gewichtsprozent des Präpolymerurethans zwischen ungefähr 70 bis 95 % betragen.

12. Verfahren nach Anspruch 1, wobei die Gewichtsprozent des langsam härtenden Urethanpräpolymers zwischen ungefähr 45 bis 75 % betragen.

13. Verfahren nach Anspruch 1, wobei die Gewichtsprozent des flexiblen Bindemittel-Urethanpräpolymers zwischen ungefähr 15 bis 40 % betragen.

14. Verfahren nach Anspruch 1, wobei die Gewichtsprozent des aliphatischen Quenchers zwischen ungefähr 5 bis 15 % betragen.

15. Verfahren nach Anspruch 1, wobei die Gewichtsprozent des Verstärkungs-Extenders zwischen ungefähr 5 bis 20 % betragen.

16. Verfahren nach Anspruch 1, wobei die Gewichtsprozent des thixotropen Mittels zwischen ungefähr 1 bis 20 % betragen.

## Revendications

1. Procédé de production d'un adhésif à matrice polymère, ledit procédé comprenant les étapes consistant à :
a) se munir d'un mélange polymère à extrémité coiffée de silane ;
b) ajouter un agent d'extinction aliphatique ;
c) ajouter un agent d'extension de renfort ; et
d) ajouter un agent thixotrope ;
le mélange polymère à extrémité coiffée de silane comprenant un prépolymère d'uréthane à extrémité coiffée de silane, le prépolymère d'uréthane à extrémité coiffée de silane étant produit par combinaison d'un silane et d'un prépolymère d'uréthane, et
le prépolymère d'uréthane comprenant un prépolymère d'uréthane à durcissement lent ayant une fonctionnalité (Fn) comprise entre environ 2,5 et 2,55, une teneur en NCO comprise entre environ 15 et 18 %, une viscosité comprise entre 3000 et 8000 cps (entre 3000 et 8000 mPa.s) à 25 °C,
et une masse équivalente comprise entre 250 et 270 ; un prépolymère d'uréthane d'agent liant flexible ayant une fonctionnalité (Fn) d'environ 2,00, une teneur en NCO comprise entre environ 7 et 10 %, une viscosité comprise entre 1500 et 3500 cps (entre 1500 et 3500 mPa.s) à 25 °C, et une masse équivalente comprise entre 425 et 550, ou une combinaison des deux, le prépolymère d'uréthane à durcissement lent et le prépolymère d'uréthane d'agent liant flexible étant des prépolymères de polyisocyanate basés sur le diisocyanate de diphénylméthane (MDI).

2. Procédé selon la revendication 1, dans lequel le silane comprend un alkoxysilane fonctionnalisé par amino.

3. Procédé selon la revendication 1, dans lequel un catalyseur est ajouté au silane qui est ajouté au prépolymère d'uréthane.

4. Procédé selon la revendication 1, dans lequel l'agent d'extinction aliphatique comprend un ester d'acide gras aliphatique.

5. Procédé selon la revendication 1, dans lequel l'agent d'extension de renfort comprend du carbonate de calcium.

6. Procédé selon la revendication 1, dans lequel l'agent thixotrope comprend du silicate.

7. Procédé selon la revendication 1, dans lequel le procédé comprend en outre l'ajout d'un piège à humidité.

8. Procédé selon la revendication 1, dans lequel le procédé comprend en outre l'ajout d'un promoteur d'adhérence.

9. Procédé selon la revendication 1, dans lequel le procédé comprend en outre l'ajout d'un agent tackifiant.

10. Procédé selon la revendication 10, dans lequel l'agent tackifiant comprend du polyéther polyol ayant une masse moléculaire d'au moins 4000 g/mol.

11. Procédé selon la revendication 1, dans lequel le pourcentage massique du prépolymère d'uréthane est compris entre 70 et 95 %.

12. Procédé selon la revendication 1, dans lequel le pourcentage massique du prépolymère d'uréthane à durcissement lent est compris entre 45 et 75 %.

13. Procédé selon la revendication 1, dans lequel le pourcentage massique du prépolymère d'uréthane d'agent liant flexible est compris entre 15 et 40 %.

14. Procédé selon la revendication 1, dans lequel le pourcentage massique de l'agent d'extinction aliphatique est compris entre 5 et 15 %.

15. Procédé selon la revendication 1, dans lequel le pourcentage massique de l'agent d'extension de renfort est compris entre 5 et 20 %.

16. Procédé selon la revendication 1, dans lequel le pourcentage massique de l'agent thixotrope est compris entre 1 et 20 %.
